(19) Europäisches Patentamt / European Patent Office / Office européen des brevets

(11) **EP 4 389 567 A1**

(12) **DEMANDE DE BREVET EUROPEEN**

(43) Date de publication:
**26.06.2024 Bulletin 2024/26**

(21) Numéro de dépôt: **23218278.2**

(22) Date de dépôt: **19.12.2023**

(51) Classification Internationale des Brevets (IPC):
**B62D 15/02** [(2006.01)] **G01S 7/288** [(2006.01)]
**G01S 13/53** [(2006.01)]

(52) Classification Coopérative des Brevets (CPC):
**G01S 7/288; G01S 13/53**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **20.12.2022 FR 2213942**

(71) Demandeur: **THALES**
**92190 Meudon (FR)**

(72) Inventeurs:
• **GILLIOT, Adrien**
  **33700 MERIGNAC (FR)**
• **CORRETJA, Vincent**
  **33700 MERIGNAC (FR)**

(74) Mandataire: **Lavoix**
**2, place d'Estienne d'Orves**
**75441 Paris Cedex 09 (FR)**

(54) **PROCÉDÉ DE DÉTERMINATION DE SEUILS DE DÉTECTION D'UN DISPOSITIF DE TAUX DE FAUSSE ALARME CONSTANT D'UN CAPTEUR, DISPOSITIFS ET PROCÉDÉ ASSOCIÉS**

(57) La présente invention concerne un procédé de détermination de seuils de détection d'un dispositif TFAC d'un capteur observant un environnement, le dispositif TFAC étant pourvu d'un estimateur propre à déterminer une estimation des paramètres liés aux bruits affectant le capteur en fonction de paramètres liés à l'environnement, le procédé comprenant les étapes de :
- estimation de paramètres liés aux bruits, pour obtenir un vecteur de paramètres,
- calcul de premiers seuils de détection pour que, pour toutes les configurations possibles du vecteur de paramètres, le dispositif TFAC fonctionne à une probabilité de fausse alarme prédéfinie,
- caractérisation des erreurs d'estimations de l'estimateur, et
- correction de chaque premier seuil de détection pour obtenir des deuxièmes seuils de détection, l'étape de correction tenant compte les paramètres d'erreur.

FIG.2

**Description**

La présente invention concerne un procédé de détermination de seuils de détection d'un dispositif de taux de fausse alarme constant d'un capteur. La présente invention se rapporte également à un procédé d'observation mettant en oeuvre les étapes du procédé de détermination. L'invention se rapporte enfin à des dispositifs, à savoir un calculateur, un système de détection et un véhicule.

Dans le domaine de la détection, les systèmes de détection utilisent usuellement des procédés de traitement de signaux. Ces procédés ont pour tâche d'extraire dans un signal reçu une ou plusieurs portions correspondant à une information utile sur la partie d'environnement faisant l'objet de la détection.

S'il est considéré le cas d'un radar, l'information utile correspond à des ondes réfléchies par des objets. Ces ondes réfléchies ou échos peuvent avoir un niveau variable en fonction de la nature et des dimensions des objets considérés.

Pour les cas où le signal réfléchi par l'objet présente une amplitude faible, le traitement du signal radar cherche à extraire ce signal réfléchi du bruit thermique ou du fouillis ambiant reçu par le récepteur du radar et qui accompagnent ce signal. Le terme « fouillis » désigne dans ce cas le signal réfléchi par tout élément ne faisant pas l'objet de la détection. Ce peut être par exemple le signal réfléchi par des éléments de relief, des constructions, des étendues d'eau, de la végétation ou encore des phénomènes atmosphériques tels que des nuages.

Une telle opération d'extraction est, par exemple, mise en oeuvre par un dispositif de taux de fausse alarme constant. L'acronyme TFAC est souvent utilisé pour désigner le terme de « taux de fausse alarme constant », de sorte que le dispositif est souvent dénommé dispositif de TFAC.

De manière générale, un dispositif de TFAC fonctionne en analysant tout signal reçu par le récepteur par mise en oeuvre d'une suite d'opérations. Par exemple, le dispositif de TFAC soustrait au signal incident un niveau moyen de signal ambiant. La différence est ensuite comparée à un seuil de détection. Tout signal reçu dont le niveau dépasse le seuil de détection est considéré comme représentatif de la présence d'un objet à la distance considérée correspondant à l'instant de réception du signal par le récepteur du radar.

Ainsi, le bon fonctionnement du dispositif de TFAC dépend beaucoup de la justesse de la valeur du seuil de détection. De ce fait, en pratique, ce n'est pas un seuil de détection mais une pluralité de seuils de détection qui sont utilisés, ces seuils dépendant des conditions environnementales dans lesquelles opère le capteur.

Toutefois, les dispositifs de TFAC présentent des performances dégradées dans certaines circonstances, notamment lorsque l'environnement comporte des zones de nature différente engendrant des variations importantes du niveau de fouillis.

Il existe donc un besoin pour un procédé de détermination de seuils de détection d'un dispositif de taux de fausse alarme constant d'un capteur qui soit plus fiable.

A cet effet, la description décrit un procédé de détermination de seuils de détection d'un dispositif de taux de fausse alarme constant d'un capteur,

le capteur étant propre à observer un environnement, le dispositif de taux de fausse alarme constant étant pourvu d'un estimateur propre à déterminer une estimation des paramètres liés aux bruits affectant le capteur en fonction de paramètres liés à l'environnement que le capteur observe,

le procédé de détermination étant mis en oeuvre par un calculateur et comprenant :

- une étape d'estimation de paramètres liés aux bruits affectant le capteur, pour obtenir un vecteur de paramètres,
- une étape de calcul de premiers seuils de détection pour le dispositif de taux de fausse alarme constant, les premiers seuils étant calculées pour que, pour toutes les configurations possibles du vecteur de paramètres, le dispositif de taux de fausse alarme constant fonctionne à une probabilité de fausse alarme prédéfinie,
- une étape de caractérisation des erreurs d'estimations de l'estimateur du dispositif de taux de fausse alarme constant, pour obtenir des paramètres relatifs aux erreurs d'estimations, et
- une étape de correction de la valeur de chaque premier seuil de détection pour obtenir des deuxièmes seuils de détection, l'étape de correction tenant compte les paramètres relatifs aux erreurs d'estimations, les deuxièmes seuils de détection étant les seuils déterminés pour le dispositif de taux de fausse alarme constant.

Il convient de comprendre ici que les étapes de calcul des premiers seuils et de caractérisation des erreurs d'estimation du vecteur de paramètre sont des étapes réalisées sans utilisation de données réelles. Elles peuvent donc être réalisées hors-ligne, ce qui est un avantage important du procédé. Le gain en fiabilité est ici obtenu sans avoir recours à une utilisation prolongée du système de détection pour que celui-ci croise un ensemble représentatif de cas d'utilisation.

Dans ce contexte, un bruit affectant le capteur recouvre l'ensemble des contributions à la détection du capteur qui n'est pas une cible.

Les principales contributions aux bruits proviennent donc du bruit thermique présent dans les circuits électroniques du capteur, du fouillis (échos radar provenant de la surface océanique, de la terre et/ou de tout élément de surface n'étant pas une cible) et de perturbations atmosphériques (par exemple des nuages ou de la pluie).

Selon des modes de réalisation particuliers, le procédé de détermination de seuils de détection présente une ou plusieurs des caractéristiques suivantes, prise(s) isolément ou selon toutes les combinaisons techniquement possibles :

- l'étape de correction comporte, pour chaque configuration possible du vecteur de paramètres, les opérations de :

  - détermination du premier seuil de détection et des premiers seuils de détection que le dispositif de taux de fausse alarme constant est susceptible d'utiliser compte-tenu des erreurs d'estimations de l'estimateur, et
  - modification des valeurs des premiers seuils de détection que le dispositif de taux de fausse alarme constant est susceptible d'utiliser compte-tenu des erreurs d'estimations en fonction des différentes valeurs des premiers seuils de détection déterminés.

- l'étape de correction comporte, en outre, une opération de calcul d'une meilleure valeur parmi les premiers seuils de détection déterminés pour assurer que le dispositif de taux de fausse alarme constant fonctionne à une probabilité de fausse alarme prédéfinie, pour obtenir une meilleure valeur obtenue, et
  lors de l'opération de modification, chacune des valeurs des premiers seuils de détection que le dispositif de taux de fausse alarme constant est susceptible d'utiliser compte-tenu des erreurs d'estimations sont remplacées par la meilleure valeur obtenue.
- la meilleure valeur est le maximum de l'ensemble des valeurs déterminées lors de l'opération de détermination.
- le vecteur de paramètres comporte un paramètre lié au bruit thermique du capteur et un paramètre lié au bruit généré par l'environnement que le capteur observe.
- un paramètre lié au bruit généré par l'environnement que le capteur observe caractérise le fouillis de mer.

La description concerne aussi un procédé d'observation d'un environnement par un capteur propre à observer l'environnement, le capteur faisant partie d'un système de détection comprenant :

- un capteur propre à observer un environnement,
- un dispositif de taux de fausse alarme constant du capteur, le dispositif de taux de fausse alarme constant étant pourvu d'un estimateur propre à déterminer une estimation des paramètres liés aux bruits affectant le capteur en fonction de paramètres liés à l'environnement que le capteur observe, et

- un calculateur,

le procédé d'observation comportant :

- une étape de mise en oeuvre d'un procédé de détermination de seuils de détection du dispositif de taux de fausse alarme constant,
- une étape de réception d'ondes provenant de l'environnement, et
- une étape d'analyse des ondes reçues par le dispositif de taux de fausse alarme constant pour déterminer si les ondes comportent uniquement du bruit, l'analyse étant basée sur les seuils déterminés.

La description se rapporte également à un calculateur propre à déterminer des seuils de détection d'un dispositif de taux de fausse alarme constant d'un capteur,

le capteur étant propre à observer un environnement, le dispositif de taux de fausse alarme constant étant pourvu d'un estimateur propre à déterminer une estimation des paramètres liés aux bruits affectant le capteur en fonction de paramètres liés à l'environnement que le capteur observe,
le calculateur étant propre à :

- estimer des paramètres liés aux bruits affectant le capteur, pour obtenir un vecteur de paramètres,
- calculer des premiers seuils de détection pour le dispositif de taux de fausse alarme constant, les premiers seuils étant calculés pour que, pour toutes les configurations possibles du vecteur de paramètres, le dispositif de taux de fausse alarme constant fonctionne à une probabilité de fausse alarme prédéfinie,
- caractériser des erreurs d'estimations de l'estimateur du dispositif de taux de fausse alarme constant, pour obtenir des paramètres relatifs aux erreurs d'estimations, et

- corriger la valeur des premiers seuils de détection pour obtenir des deuxièmes seuils de détection, l'étape de correction tenant compte les paramètres relatifs aux erreurs d'estimations, les deuxièmes seuils de détection étant les seuils déterminés pour le dispositif de taux de fausse alarme constant.

La description concerne aussi un système de détection comprenant :

- un capteur étant propre à observer un environnement,
- un dispositif de taux de fausse alarme constant du capteur, le dispositif de taux de fausse alarme constant étant pourvu d'un estimateur propre à déterminer une estimation des paramètres liés aux bruits affectant le capteur en fonction de paramètres liés à l'environnement que le capteur observe, et
- un calculateur tel que précédemment décrit.

La description se rapporte également à un véhicule comportant un système de détection tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple de véhicule,
- la figure 2 est une représentation schématique d'un ordinogramme correspondant à un exemple de mise en oeuvre d'un procédé de détermination de seuils de détection,
- la figure 3 est une représentation schématique du résultat de la mise en oeuvre d'une étape du procédé de détermination de la figure 2,
- la figure 4 est une représentation schématique du résultat de la mise en oeuvre à un premier stade d'une autre étape du procédé de détermination de la figure 2,
- la figure 5 est une représentation schématique du résultat de la mise en oeuvre à un deuxième stade de la même étape que celle de la figure 4, et
- la figure 6 est une représentation schématique du résultat de la mise en oeuvre à un stade final de la même étape que celle de la figure 4.

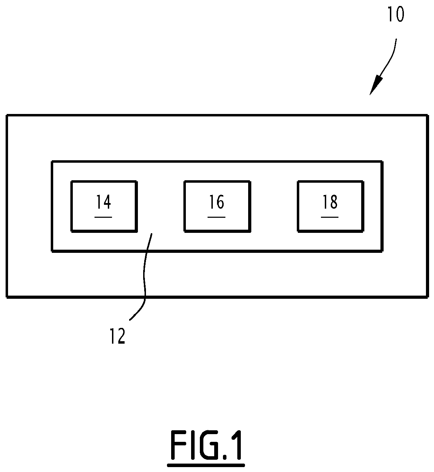

Un véhicule 10 est illustré schématiquement sur la figure 1.

Le véhicule 10 est tout type de véhicule et en particulier, peut être un véhicule terrestre, aérien ou marin.

Le véhicule 10 comporte un système de détection 12 propre à détecter des éléments dans un environnement.

En ce sens, le système de détection 12 peut être utilisé comme système de surveillance.

Le système de détection 12 comporte un capteur 14, un dispositif 16 de taux de fausse alarme constant et un calculateur 18.

Le capteur 14 est, par exemple, un radar.

Plusieurs types de radar peuvent être envisagés, tel un radar de poursuite, un radar de détection.

Le radar peut être utilisé au sol, en mer ou dans une plateforme mobile, notamment un avion.

En variante, le capteur 14 est un sonar.

Selon une autre variante, le capteur 14 est un capteur optronique.

Par exemple, le capteur 14 est un détecteur infrarouge ou une caméra.

Comme indiqué précédemment, le dispositif 16 de TFAC est propre à déterminer les signaux dépassant un seuil de détection dépendant de l'environnement dans lequel le capteur 14 opère.

Le calculateur 18 est un dispositif embarqué propre à contrôler l'ensemble des éléments du système de détection 12.

Selon l'exemple décrit, le calculateur 18 est propre à mettre en oeuvre un procédé de détermination de seuils de détection du dispositif 16 de TFAC.

Pour simplifier, il est supposé ici que le calculateur 18 met en oeuvre l'ensemble des étapes du procédé de détermination.

Toutefois, dans d'autres modes de réalisation, certaines étapes peuvent être réalisées hors ligne en fonction des données accessibles.

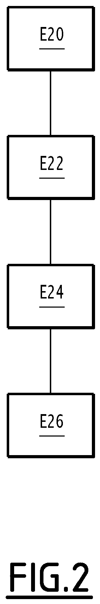

Le fonctionnement du calculateur 18 est maintenant décrit en référence à la figure 2 qui illustre un exemple de mise en oeuvre d'un tel procédé de détermination.

Le procédé de détermination cherche à obtenir des seuils de détection pour le dispositif 16 de TFAC qui permette d'améliorer les performances du dispositif 16.

Le procédé de détermination comporte, selon l'exemple de la figure 2, quatre étapes qui sont une étape d'estimation E20, une étape de calcul E22, une étape de caractérisation E24 et une étape de correction E26.

Lors de l'étape d'estimation E20, le calculateur 18 reçoit un ensemble d'observations de l'environnement par le capteur 14.

Le calculateur 18 estime à partir de ces observations un vecteur de paramètres *C.*

Les paramètres du vecteur de paramètres *C* permettent de caractériser les phénomènes provoquant des signaux parasites au niveau du capteur 14.

Les paramètres du vecteur de paramètres *C* sont ainsi des paramètres caractérisant la loi de probabilité d'occurrence de ces phénomènes.

Ces paramètres peuvent généralement être estimés aisément, notamment à l'aide de l'altitude, de la géométrie d'observation ou de la température du bruit thermique.

Le vecteur de paramètres *C* est donc un ensemble de paramètres liés aux bruits affectant le capteur 14.

A titre d'exemple particulier, dans le cas d'un capteur évoluant dans un environnement comportant à la fois de l'air et de l'eau, les phénomènes parasitaires ou nuisances sont de deux types, un premier phénomène lié aux échos de mer et un deuxième phénomène liée au bruit thermique du système de détection 12.

Le premier phénomène présente une puissance souvent modélisée par une loi en $K(\mu_c, v)$, avec $\mu_c$ la puissance moyenne et $v$ le facteur de forme de la loi, décrivant l'impulsivité du fouillis de mer.

Dans cette expression, le facteur de forme $v$ (impulsivité) est le plus déterminant.

Selon l'exemple décrit, le comportement du deuxième phénomène est donné par un paramètre $\mu_n$ qui correspond à la puissance moyenne. Le bruit thermique est alors usuellement modélisé par une loi en puissance du type

$$Exp\left(\frac{1}{\mu_n}\right).$$

Alternativement, le deuxième phénomène peut être caractérisé par un paramètre *RCB,* l'acronyme RCB renvoyant à la dénomination correspondante de 'rapport Clutter à Bruit' (le terme clutter est une autre désignation du fouillis). Le paramètre *RCB* est donné par la puissance du fouillis de mer relativement au bruit thermique.

Ainsi, il peut être envisagé dans l'exemple décrit que le vecteur de paramètres *C* comporte deux paramètres, à savoir l'impulsivité $v$ du fouillis de mer et le paramètre RCB de rapport clutter à bruit.

A travers cet exemple, il apparaît que le vecteur de paramètres *C* comporte, de préférence, un paramètre lié au bruit thermique du capteur 14 et un paramètre lié au bruit généré par l'environnement que le capteur 14 observe.

Le calculateur 18 dispose ainsi du vecteur de paramètres *C* à l'issue de la mise en oeuvre de l'étape d'estimation E20.

Le vecteur de paramètres *C* est propre à prendre un ensemble de valeurs correspondant à l'ensemble des valeurs possibles pour chaque paramètre. Chaque ensemble de valeurs possibles est une configuration possible du vecteur de paramètres *C.*

L'objectif du procédé décrit est de déterminer les seuils que va utiliser le dispositif 16 de TFAC pour obtenir la meilleure performance possible pour le système de détection 12.

Lors de l'étape de calcul E22, le calculateur 18 calcule des premiers seuils de détection en prenant en compte le vecteur de paramètres et un taux de fausse alarme prédéfini.

Le taux de fausse alarme prédéfini est appelé $Pfa_{consigne}$ dans la suite de la description.

Un tel calcul est réalisable par tout moyen connu de l'homme du métier.

A titre d'exemple particulier pour le cas décrit d'un capteur évoluant dans un environnement comportant à la fois de l'air et de l'eau, le calculateur 18 peut mettre en oeuvre les opérations qui suivent.

Le calculateur 18 détermine usuellement une statistique de test *x* maximisant la probabilité de détection pour une probabilité de fausse alarme $Pfa_{consigne} = 1 - \alpha$.

Pour cela, le calculateur 18 peut avantageusement utiliser les modèles de Swerling, les distributions statistiques des différentes sources de bruit (fouillis et bruit thermique pour l'exemple décrit ici), et le Lemme de Neyman-Pearson.

Une fois l'expression de la statistique de test optimale connue, le calculateur 18 évalue la distribution statistique $f_n(x, C)$ de la statistique de test *x* sous l'hypothèse qu'elle ait pour origine du signal de bruit.

Le calculateur 18 obtient cette distribution $f_n$ analytiquement ou par mise en oeuvre d'une méthode de Monte-Carlo.

Le calculateur 18 détermine alors un premier seuil de détection $S1_{Pfa_{consigne}}$ par inversion de l'intégrale suivante :

$$Pfa_{consigne} = \int_{B_{inf}}^{S1_{Pfa_{consigne}}} f_{nuisance}(x, C)\, dx$$

Avec $B_{inf}$ la borne inférieure du support de $x$ (si $x \in \mathbb{R}^+$, $B_{inf}$ = 0).

Pour une loi simple, le calculateur 18 peut effectuer une telle inversion analytiquement.

Mais dans le cas complexe décrit, le calculateur 18 réalise l'inversion numériquement en un ensemble de points (paramétrisations de $C$) par dichotomie.

Selon un autre exemple, le calculateur 18 utilise une méthode des moindres carrés combinée à une descente de gradient.

En procédant ainsi pour toutes les valeurs possibles du vecteur de paramètres $C$, il est obtenu un ensemble de premières seuils de détection pour chaque valeur des paramètres du vecteur de paramètres $C$.

Dans l'exemple décrit, cela correspond donc à une table donnant le bon seuil de détection pour une valeur de l'impulsivité $\nu$ du fouillis de mer et de paramètre RCB de rapport clutter à bruit.

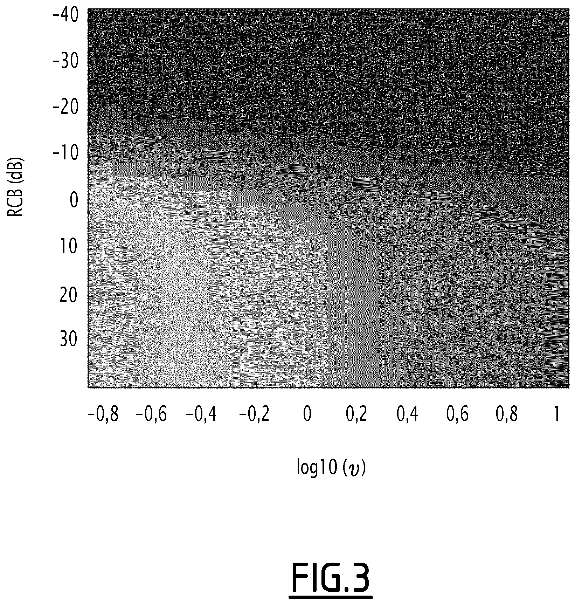

Une telle table peut donc être représentée graphiquement comme une carte telle que visible sur la représentation de la figure 3.

Dans cette figure, il est représenté la valeur du seuil sous forme de niveaux de gris en fonction des valeurs de l'impulsivité $\nu$ du fouillis de mer (sous forme du $\log_{10}(\nu)$ ici) et du paramètre RCB de rapport clutter à bruit (exprimé en dB). Chaque niveau de gris donne la valeur du seuil pour une case correspondant à un ensemble de valeurs des deux paramètres.

Ainsi, à l'issue de l'étape de calcul E22, le calculateur 18 a calculé des premiers seuils de détection pour le dispositif 16 de TFAC pour que, pour toutes les configurations possibles du vecteur de paramètres, et en l'absence d'erreurs d'estimation sur ce vecteur de paramètre (i.e. le calculateur 18 connaît parfaitement la paramétrisation des lois statistiques des nuisances fouillis et bruit thermique), le dispositif 16 de TFAC fonctionne à une probabilité de fausse alarme prédéfinie.

Lors de l'étape de caractérisation E24, le calculateur 18 cherche à caractériser les performances de l'estimateur noté $\hat{C}$ du vecteur de paramètres C utilisé lors de l'étape E20.

L'estimateur $\hat{C}$ est un estimateur dont est pourvu le dispositif 16 de TFAC.

L'estimateur $\hat{C}$ est propre à déterminer une estimation des paramètres liés aux bruits affectant le capteur 14 en fonction de paramètres liés à l'environnement que le capteur 14 observe.

A titre d'exemple de paramètres liés à l'environnement, il peut être cité l'altitude du véhicule 10, la nature de l'environnement (terre ou eau par exemple) ou des informations météorologiques (présence de nuages, de pluie ou autres).

Cet estimateur $\hat{C}$ correspond donc à une fonctionnalité du dispositif 16 de TFAC, pouvant prendre toute forme connue pour l'homme du métier.

En l'occurrence, il s'agit ici de caractériser les erreurs d'estimations commises par l'estimateur $\hat{C}$.

Selon un exemple, les performances sont exprimées sous forme des paramètres d'une loi de distribution.

Une telle étape peut être mise en oeuvre par une résolution analytique lorsque les distributions des phénomènes générant des nuisances sont connues.

Alternativement, il est possible d'utiliser des méthodes de Monte-Carlo ou des méthodes d'intégration numérique.

Selon un autre exemple, les performances sont exprimées sous forme de moments d'une loi de distribution.

En notant $C_0$ le vrai vecteur de paramètres à estimer, une réalisation de cette étape de caractérisation peut donc consister à quantifier théoriquement les deux premiers moments de l'estimateur $\hat{C}$ pour chaque paramétrisation $C_0$ (valeurs possibles des paramètres) du vecteur de paramètres $C$.

Les deux premiers moments de l'estimateur $\hat{C}$ sont définis comme suit :

$$Biais_{\hat{C}}(C_0) = E[\hat{C} - C_0]$$

$$Var_{\hat{C}}(C_0) = E\left[\left(\hat{C} - C_0\right)^2\right]$$

Avec $E[.]$ l'opérateur d'espérance mathématique.

Le premier moment ($Biais_{\hat{C}}(C_0)$) correspond à l'erreur d'estimation moyenne tandis que le deuxième moment ($Var_{\hat{C}}(C_0)$) correspond à la variance de l'erreur d'estimation.

Il serait également possible de considérer des moments d'ordre supérieur dans la mise en oeuvre de l'étape de caractérisation E24.

Pour reprendre l'exemple précité concernant un capteur évoluant dans un environnement comportant à la fois de l'air et de l'eau, il est observé que les dispositifs 16 de TFAC ont généralement pour défaut de sous-évaluer la valeur de l'impulsivité v du fouillis de mer.

Les valeurs caractérisant la performance permettent de quantifier un tel défaut d'estimation.

A l'issue de l'étape de caractérisation E22, le calculateur 18 dispose donc également de valeurs caractérisant les erreurs d'estimation du dispositif 16 de TFAC.

A titre de remarque, on comprendra que les premiers seuils de détection prennent uniquement en compte les paramètres du vecteur de paramètres $C$ et ne prennent pas en compte les valeurs caractérisant la performance d'estimation du dispositif 16 de TFAC. Les premiers seuils de détection ne sont donc pas parfaitement fiables.

Ainsi, les étapes de calcul E22 et de caractérisation E24 peuvent être réalisés de manière conjointe après la mise en oeuvre de l'étape d'estimation E20.

Par ailleurs, comme indiqué précédemment, ces étapes pourraient aussi être réalisées hors-ligne.

Lors de l'étape de correction E24, le calculateur 18 cherche à corriger les valeurs des premiers seuils de détection en tenant compte des valeurs caractérisant la performance d'estimation du dispositif 16 de TFAC.

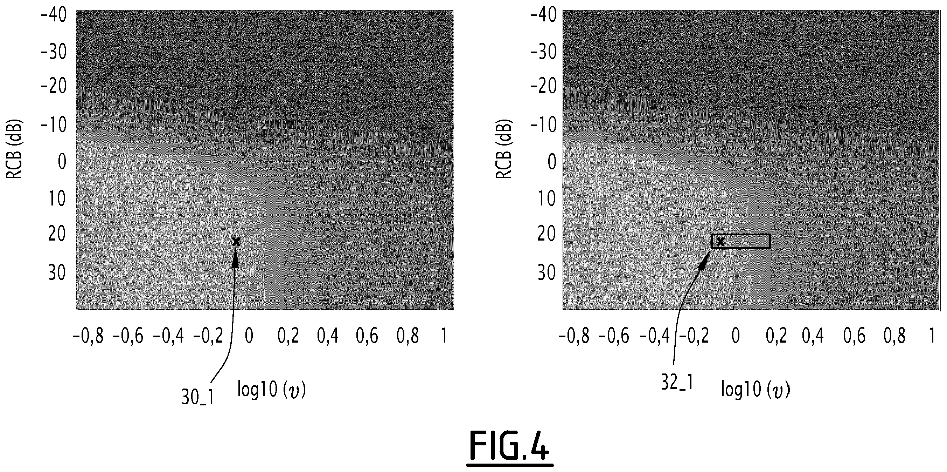

Pour expliciter comment le calculateur 18 effectue une telle correction, un exemple est maintenant décrit en référence aux figures 4 à 6 toujours pour le cas d'une détection hybride air/eau.

Le cas de la figure 4 correspond au cas d'une configuration possible du vecteur de paramètres $C$ nommée $C_1$ correspondant à $C_1 = [RCB_1\ v_1]^T$.

Pour cette configuration $C_1$, il a été déterminé une valeur assurant le respect du taux de fausse alarme prédéfini *Pfa.* Cette valeur est indiquée par le signe de référence 30 sur la figure 4.

Il est supposé pour cette configuration, l'erreur que l'estimateur $\hat{C}$ est susceptible de commettre sur l'estimation du paramètre *RCB* est inférieure à la résolution du graphe (la taille d'une case sur la figure 7 est plus grande que l'erreur commise par l'estimateur $\hat{C}$ sur le paramètre *RCB*) alors que pour la composante relative à l'impulsivité, l'estimateur $\hat{C}$ est susceptible de commettre une erreur allant jusqu'à 4 cases. Ces valeurs sont issues du calcul réalisé à l'étape de caractérisation E24.

L'ensemble des valeurs de premiers seuils de détection que le dispositif 16 de TFAC est susceptible d'utiliser compte-tenu des erreurs d'estimations correspond dans ce cas à un rectangle 32 représenté sur la figure 4. Ces valeurs sont les valeurs à modifier.

Selon l'exemple décrit, le calculateur 18 remplace les valeurs à modifier par le maximum des premiers seuils déterminés. En l'occurrence, cela conduit à augmenter les valeurs à modifier.

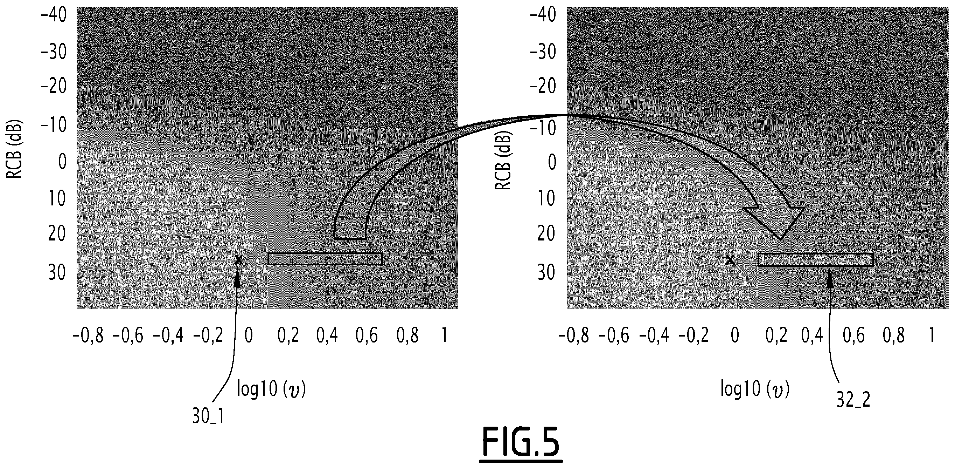

La figure 5 illustre le même mécanisme pour une deuxième configuration $C_2$. Là encore, cela conduit à rehausser les valeurs de premiers seuils contenus dans un rectangle 32.

Cette correspondance entre cette forme rectangulaire 32 et les erreurs d'estimation déterminés peut s'expliquer comme suit.

Le dimensionnement précis de la zone suppose de connaitre la probabilité a priori d'apparition de chaque configuration du vecteur de paramètres $C$, de façon à dimensionner $X = [X_{INF}, X_{SUP}]$ la zone effectivement vue par le dispositif 16 de TFAC dans la carte qui peut être qualifié telle que (cas unidimensionnel) :

$$Pfa = \int_{i_{INF}}^{i_{SUP}} \left( \int_{X_{INF}}^{X_{SUP}} \left( \int_{T_{marge}(Pfa,C_j)}^{Y_{SUP}} f_Y(y|C_i)dy \right) f_{\hat{C}}(C_j|C_i)dC_j \right) f_C(C_i)dC_i$$

Avec :

- $f_Y(y|C_i)$ la distribution des statistiques de test $Y$ sachant la configuration $C_i$, i étant un indice désignant l'ensemble des configurations $C_i$
- $f\hat{C}(C_j|C_i)$ la distribution des estimations données par l'estimateur $\hat{C}$ du vecteur de paramètres C pour la configuration $C_i$,
- $f_C(C_i)$ la distribution a priori des configurations $C_i$ du vecteur de paramètres $C$,
- $[i_{INF}, i_{SUP}]$ le support du vecteur de paramètres $C$ (configurations susceptibles d'être rencontrées en environnement réel)
- $Y_{SUP}$ la limite supérieure du support de la statistique de test $Y$

Ainsi formulé, le problème à résoudre (dimensionner la zone $X$) nécessite également de disposer de la table de seuil margée $T_{marge}$, qui est margée en utilisant la plage $X$.

En première approximation, on peut considérer la distribution a priori des configurations $C_i$ comme étant uniforme, et le maintien de la *Pfa* peut être approximativement obtenue de façon simplifiée.

Pour l'exemple décrit précédemment, pour une configuration $C_i$ de $C$, la caractérisation de l'estimateur $\hat{C}$ donne :

- Un vecteur de biais $\mu_{C_i}$
- Une matrice de covariance de l'erreur $\Sigma_{C_i}$.

En application du principe d'entropie maximale, la distribution des erreurs d'estimation de $\hat{C}$ pour la configuration $C_i$ correspond ainsi à la formule suivante :

$$\hat{C} \sim \mathcal{N}\left(\mu_{C_i}, \Sigma_{C_i}\right)$$

Avec $\mathcal{N}$ la loi normale.

Il s'agit ainsi de respecter le critère suivant :

$$\mathbb{P}\left(\sqrt{\left(\hat{C} - \mu_{C_i}\right)^T \Sigma_{C_i}^{-1}\left(\hat{C} - \mu_{C_i}\right)} > \frac{X_{SUP} - X_{INF}}{2}\right) = c.Pfa$$

Avec $c < 1$ de façon à ce que la zone soit « suffisamment grande » au regard du taux de fausse alarme prédéfini *Pfa.* Cela correspond au fait que la probabilité que l'estimateur $\hat{C}$ tombe hors de la zone est négligeable au regard taux de fausse alarme prédéfini *Pfa..*

Dans le cas d'un vecteur de paramètres *C* unidimensionnel, on obtient donc :

$$\frac{X_{SUP} - X_{INF}}{2} = \sqrt{2}.\operatorname{erf}^{-1}(1 - c.Pfa)$$

Et de façon général, le critère définit la zone à rehausser comme une ellipsoïde d'équation :

$$\sqrt{\left(C_r - \mu_{C_i}\right)^T \Sigma_{C_i}^{-1}\left(C_r - \mu_{C_i}\right)} \leq \frac{X_{SUP} - X_{INF}}{2}$$

Avec $C_r$ coordonnées des points à rehausser.

Après discrétisation, cette ellipsoïde correspond au rectangle visible sur les figures 4 et 5.

L'ensemble des opérations qui viennent d'être décrites sont répétées pour chaque configuration.

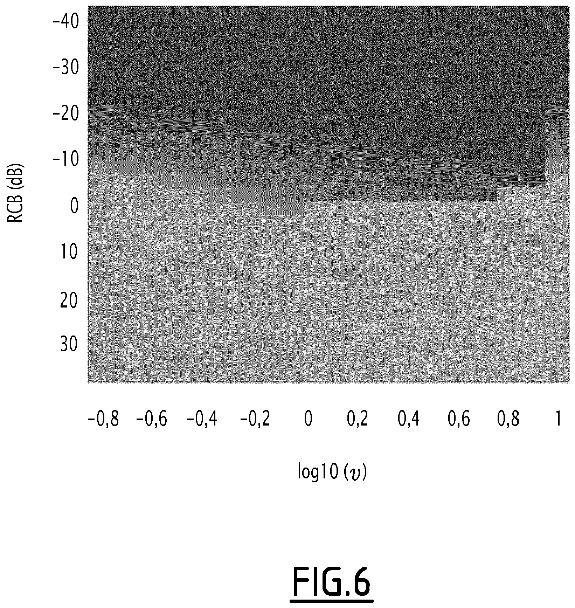

Il est ainsi obtenu la carte représentée sur la figure 6 rassemblant les valeurs de premiers seuils modifiés, ce qui correspond à des deuxièmes valeurs de seuil de détection.

Par comparaison avec la carte de la figure 3, les deuxièmes valeurs de seuil de détection sont augmentées par rapport aux premiers seuils de détection modifiés.

Ces deuxièmes valeurs de seuil de détection permettent un meilleur respect de la probabilité de fausse alarme prédéfinie.

Ce meilleur respect apparaît dans le cadre d'un procédé d'observation d'un environnement qui comporte alors une étape de réception d'ondes provenant de l'environnement, et une étape d'analyse des ondes reçues par le dispositif 16 de TFAC pour déterminer si les ondes comportent uniquement du bruit, l'analyse étant basée sur les deuxièmes seuils de détection.

L'emploi des deuxièmes seuils de détection ainsi rehaussés dégrade certes la probabilité de détection mais permet de mieux respecter la probabilité de fausse alarme souhaitée.

Le procédé qui vient d'être décrit est donc un procédé de détermination de seuils de détection d'un dispositif de taux de fausse alarme constant d'un capteur qui soit plus fiable.

D'autres modes de réalisation du procédé peuvent être considérés tout en permettant d'obtenir une telle augmentation de la fiabilité.

En particulier, lors de l'étape de correction, il est possible d'utiliser une autre opération que le maximum, comme une opération consistant simplement à prendre la valeur déterminée par l'étape de calcul.

Il pourrait aussi être envisagé de calculer une marge additionnelle à ajouter en prenant en compte les erreurs d'estimation.

**Revendications**

1. Procédé de détermination de seuils de détection d'un dispositif (16) de taux de fausse alarme constant d'un capteur (14),

   le capteur (14) étant propre à observer un environnement, le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe,
   le procédé de détermination étant mis en oeuvre par un calculateur (18) et comprenant :

   - une étape d'estimation de paramètres liés aux bruits affectant le capteur (14), pour obtenir un vecteur de paramètres,
   - une étape de calcul de premiers seuils de détection pour le dispositif (16) de taux de fausse alarme constant, les premiers seuils étant calculés pour que, pour toutes les configurations possibles du vecteur de paramètres, le dispositif (16) de taux de fausse alarme constant fonctionne à une probabilité de fausse alarme prédéfinie,
   - une étape de caractérisation des erreurs d'estimations de l'estimateur du dispositif (16) de taux de fausse alarme constant, pour obtenir des paramètres relatifs aux erreurs d'estimations, et
   - une étape de correction de la valeur de chaque premier seuil de détection pour obtenir des deuxièmes seuils de détection, l'étape de correction tenant compte les paramètres relatifs aux erreurs d'estimations, les deuxièmes seuils de détection étant les seuils déterminés pour le dispositif (16) de taux de fausse alarme constant.

2. Procédé de détermination selon la revendication 1, dans lequel, l'étape de correction comporte, pour chaque configuration possible du vecteur de paramètres, les opérations de :

   - détermination des premiers seuils de détection que le dispositif (16) de taux de fausse alarme constant est susceptible d'utiliser compte-tenu des erreurs d'estimations de l'estimateur, et
   - modification des valeurs des premiers seuils de détection que le dispositif (16) de taux de fausse alarme constant est susceptible d'utiliser compte-tenu des erreurs d'estimations en fonction des différentes valeurs des premiers seuils de détection déterminés.

3. Procédé de détermination selon la revendication 2, dans lequel, l'étape de correction comporte, en outre, une opération de calcul d'une meilleure valeur parmi les premiers seuils de détection déterminés pour assurer que le dispositif (16) de taux de fausse alarme constant fonctionne à une probabilité de fausse alarme prédéfinie, pour obtenir une meilleure valeur obtenue, et
   lors de l'opération de modification, chacune des valeurs des premiers seuils de détection que le dispositif (16) de taux de fausse alarme constant est susceptible d'utiliser compte-tenu des erreurs d'estimations sont remplacées par la meilleure valeur obtenue.

4. Procédé de détermination selon la revendication 3, dans lequel la meilleure valeur est le maximum de l'ensemble des valeurs déterminées lors de l'opération de détermination.

5. Procédé de détermination selon l'une quelconque des revendications 1 à 4, dans lequel le vecteur de paramètres comporte un paramètre lié au bruit thermique du capteur (14) et un paramètre lié au bruit généré par l'environnement que le capteur (14) observe.

6. Procédé de détermination selon l'une quelconque des revendications précédentes, dans lequel un paramètre lié au bruit généré par l'environnement que le capteur (14) observe caractérise le fouillis de mer.

7. Procédé d'observation d'un environnement par un capteur (14) propre à observer l'environnement, le capteur (14) faisant partie d'un système de détection (12) comprenant :

   - un capteur (14) propre à observer un environnement,
   - un dispositif (16) de taux de fausse alarme constant du capteur (14), le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe, et
   - un calculateur (18),

le procédé d'observation comportant :

- une étape de mise en oeuvre d'un procédé de détermination de seuils de détection du dispositif (16) de taux de fausse alarme constant,
- une étape de réception d'ondes provenant de l'environnement, et
- une étape d'analyse des ondes reçues par le dispositif (16) de taux de fausse alarme constant pour déterminer si les ondes comportent uniquement du bruit, l'analyse étant basée sur les seuils déterminés.

8. Calculateur (18) propre à déterminer des seuils de détection d'un dispositif (16) de taux de fausse alarme constant d'un capteur (14),

le capteur (14) étant propre à observer un environnement, le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe,
le calculateur (18) étant propre à :

- estimer des paramètres liés aux bruits affectant le capteur (14), pour obtenir un vecteur de paramètres,
- calculer des premiers seuils de détection pour le dispositif (16) de taux de fausse alarme constant, les premiers seuils étant calculées pour que, pour toutes les configurations possibles du vecteur de paramètres, le dispositif (16) de taux de fausse alarme constant fonctionne à une probabilité de fausse alarme prédéfinie,
- caractériser des erreurs d'estimations de l'estimateur du dispositif (16) de taux de fausse alarme constant, pour obtenir des paramètres relatifs aux erreurs d'estimations, et
- corriger la valeur des premiers seuils de détection pour obtenir des deuxièmes seuils de détection, l'étape de correction tenant compte les paramètres relatifs aux erreurs d'estimations, les deuxièmes seuils de détection étant les seuils déterminés pour le dispositif (16) de taux de fausse alarme constant.

9. Système de détection (12) comprenant :

- un capteur (14) propre à observer un environnement,
- un dispositif (16) de taux de fausse alarme constant du capteur (14), le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe, et
- un calculateur (18) selon la revendication 8.

10. Véhicule comportant un système de détection selon la revendication 9.

FIG.1

E20

E22

E24

E26

FIG.2

FIG.3

FIG.4

**FIG.5**

## FIG.6

Europäisches
Patentamt

European
Patent Office

Office européen
des brevets

**RAPPORT DE RECHERCHE EUROPEENNE**

Numéro de la demande

**EP 23 21 8278**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 875 912 A1 (THOMSON APPLIC RADARS CT [FR]) 31 mars 2006 (2006-03-31)<br>* abrégé; figure 8 *<br>* page 12, lignes 1-17, 21-32 *<br>* page 13, lignes 27-32 *<br>----- | 1-10 | INV.<br>B62D15/02<br>G01S7/288<br>G01S13/53 |
| A | FR 3 099 450 A1 (RENAULT SAS [FR]; NISSAN MOTOR [JP]) 5 février 2021 (2021-02-05)<br>* abrégé; figures 1-6 *<br>* alinéas [0209], [0214] *<br>----- | 1-10 | |
| A | FR 3 121 410 A1 (RENAULT SAS [FR]) 7 octobre 2022 (2022-10-07)<br>* abrégé; figure 4 *<br>* alinéas [0095], [0106] *<br>----- | 1-10 | |

DOMAINES TECHNIQUES
RECHERCHES (IPC)

B62D
G01S

Le présent rapport a été établi pour toutes les revendications

| Lieu de la recherche | Date d'achèvement de la recherche | Examinateur |
|---|---|---|
| Munich | 19 avril 2024 | Cordeiro, J |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

......................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 21 8278

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-04-2024

| Document brevet cité au rapport de recherche | | Date de publication | Membre(s) de la famille de brevet(s) | | Date de publication |
|---|---|---|---|---|---|
| FR 2875912 | A1 | 31-03-2006 | AUCUN | | |
| FR 3099450 | A1 | 05-02-2021 | AUCUN | | |
| FR 3121410 | A1 | 07-10-2022 | CN | 117120323 A | 24-11-2023 |
| | | | EP | 4320026 A1 | 14-02-2024 |
| | | | FR | 3121410 A1 | 07-10-2022 |
| | | | JP | 2024514548 A | 02-04-2024 |
| | | | KR | 20230166124 A | 06-12-2023 |
| | | | WO | 2022214268 A1 | 13-10-2022 |

EPO FORM P0460

Pour tout renseignement concernant cette annexe : voir Journal Officiel de l'Office européen des brevets, No.12/82